# EUROPÄISCHE PATENTANMELDUNG

(11) **EP 1 132 869 A2**
(43) Veröffentlichungstag der Anmeldung: **12.09.2001**
(21) Anmeldenummer: 01101996.5
(22) Anmeldetag: 30.01.2001
(51) Int. Cl.: G07C 5/00

(54) **Dokumentationsvorrichtung**

(30) Priorität: 09.03.2000 DE 10010841
(71) Anmelder: HANSA METALLWERKE AG, 70567 Stuttgart (DE)
(72) Erfinder: Fehrmann, Frank, 70771 Leinfelden-Echterdingen (DE); Kunkel, Horst, 70199 Stuttgart (DE); Schmidt, Michael, 70825 Korntal-Münchingen (DE); Heiss, Stephan, 70565 Stuttgart (DE)
(74) Vertreter: Ostertag, Ulrich, Dr.

(57) **Zusammenfassung**

Eine Dokumentationsvorrichtung (1) dient zur Dokumentation und/oder Überwachung des Zustands von transportierten Wären. Sie weist mindestens einen Sensor (6) zur Aufnahme von Zustandsparameter-Daten eines Transportfahrzeugs (2) und/oder von darin transportierten Waren auf. Zusätzlich weist sie mindestens eine Aufzeichnungseinrichtung (8) auf. Diese ist an dem Transportfahrzeug (2) oder den Waren angebracht und steht mit dem Sensor (6) zur Aufzeichnung der Zustandsparameter-Daten in Signalverbindung. Eine mobile Übertragungseinrichtung (14) des Transportfahrzeugs (2) steht mit der Aufzeichnungseinrichtung (8) in Signalverbindung. Ferner weist die Dokumentationsvorrichtung (1) eine stationäre Zentralstation (20) für die zentrale Dokumentation der aufgezeichneten Zustandsparameter-Daten auf. Die Übertragung der Zustandsparameter-Daten erfolgt drahtlos zwischen einer mobilen Übertragungseinrichtung (14) und einer mit der Zentralstation (20) verbundenen stationären Übertragungseinrichtung (21). Durch die drahtlose Übertragung ist eine ständig aktualisierte Dokumentation und/oder Überwachung der Zustandsparameter-Daten in der ortsfesten Zentralstation (20) gewährleistet.

## Beschreibung

Die Erfindung betrifft eine Dokumentationsvorrichtung gemäß dem Oberbegriff des Anspruchs 1.

Derartige Dokumentationsvorrichtungen dienen dazu, den Zustand von Waren während eines Transports lückenlos festzuhalten. Waren, für die eine derartige Dokumentation notwendig ist, sind z. B. gekühlte Produkte wie bestimmte Lebensmittel oder auch Versorgungsmittel im medizinischen Bereich wie Blutplasma.

Bei vom Markt her bekannten derartigen Dokumentationsvorrichtungen werden die Zustandsparameter-Daten während des Transports in der mindestens einen Aufzeichnungseinrichtung abgelegt und nach dem Transport durch Anschluß an eine externe, stationäre Zentralstation, z.B. einen PC, ausgelesen. Während des Transports ist bei einer solchen Dokumentationsvorrichtung eine Kontrolle des Zustands der Ware von der Zentralstation, z.B. der Firmenzentrale des Warenempfängers, aus nicht gewährleistet. Eine schnelle Reaktion von dort aus, z. B. zum Ergreifen von Gegenmaßnahmen bei Änderung der Zustandsparameter-Daten derart, daß eine Beeinträchtigung der zukünftigen Gebrauchsfähigkeit der Ware zu erwarten ist, kann daher nicht erfolgen. Oftmals kann erst geraume Zeit nach dem Transport festgestellt werden, daß die Ware einen Transportschaden aufweist, was zu erheblichen logistischen Problemen und zu Mehrkosten führt. Für das Anschließen der externen Zentralstation zum Auslesen der Daten ist zudem zusätzliches Personal erforderlich.

Es ist daher die Aufgabe der vorliegenden Erfindung, eine Dokumentationsvorrichtung der eingangs genannten Art derart weiterzubilden, daß während des Transports eine Dokumentation und/oder Überwachung der Zustandsparameter-Daten in der Zentralstation möglich ist.

Diese Aufgabe wird erfindungsgemäß gelöst durch eine Dokumentationsvorrichtung mit den im Anspruch 1 genannten Merkmalen.

Als Transportfahrzeug wird hierbei allgemein jedes Land-, Wasser- oder Luftfahrzeug bezeichnet.

Die erfindungsgemäße Datenübertragungsstrecke, die gebildet wird aus der mobilen Übertragungseinrichtung und der stationären Übertragungseinrichtung, ermöglicht einen regelmäßig aktualisierbaren Datenfluß zwischen dem Transportfahrzeug und der Zentralstation. In dieser lassen sich die Zustandsparameter-Daten somit schon während des Transports dokumentieren und/oder überwachen. Folglich kann sofort entschieden werden, ob die Ware beim Transport Schaden angenommen hat oder nicht. Zusätzlich können bereits während des Transports Gegenmaßnahmen gegen eine ggf. erfolgende Änderung der Zustandsparameter-Daten getroffen werden.

Eine stationäre Übertragungseinrichtung gemäß Anspruch 2 gewährleistet eine sichere Signalverbindung zwischen der mobilen und der stationären Übertragungseinrichtung bei relativ geringer Übertragungsleistung.

Dabei ist die Übertragung mit einer Übertragungseinrichtung gemäß Anspruch 3 kostengünstig realisierbar.

Mit der Weiterbildung gemäß Anspruch 4 läßt sich auf einfache Weise die Dokumentation und/oder Überwachung der Zustandsparameter-Daten von Waren, die auf mehrere Transporteinheiten verteilt sind, realisieren.

Dabei führt die Ausgestaltung nach Anspruch 5 dazu, daß bezüglich der Übertragung der Zustandsparameter-Daten voneinander unabhängige Transporteinheiten eingesetzt werden können. Eine ggf. sonst erforderliche Verschaltung der Transporteinheiten zur Schaffung eines Übertragungswegs entfällt.

Die zusätzliche Signalverbindung zwischen den Transporteinheiten gemäß Anspruch 6 ermöglicht eine Zusammenfassung der Zustandsparameter-Daten mehrerer Transporteinheiten. Diese zusammengefaßten Daten können dann gemeinsam übertragen werden.

Eine zentrale mobile Übertragungseinrichtung gemäß Anspruch 7 führt zur Möglichkeit einer zusätzlichen Überwachung der Zustandsparameter-Daten der Transporteinheiten auf dem Transportfahrzeug. Hierzu kann die zentrale mobile Übertragungseinrichtung mit einer entsprechenden Anzeige ausgerüstet sein, um den Fahrzeugführer über den Stand der Zustandsparameter-Daten zu unterrichten. Der Fahrzeugführer kann dann, falls erforderlich, Gegenmaßnahmen ergreifen, indem er z.B. den Transport abbricht oder einstellbare Einrichtungen der Transporteinheiten, z.B. einen Kühlregler, nachjustiert.

Die Signalverbindung gemäß Anspruch 8 läßt sich kostengünstig dadurch realisieren, daß als Kabel ein elektrisches Versorgungskabel des Transportfahrzeugs eingesetzt wird, auf das die Signaldaten aufmoduliert werden.

Kopplungseinheiten gemäß Anspruch 9 sind dann vorteilhaft, wenn der Signalweg zwischen der Aufzeichnungseinrichtung und der zentralen mobilen Übertragungseinrichtung z.B. beim Be- und Entladen der Transporteinheit unterbrochen wird. Statt z.B. einer galvanischen Steckverbindung kann dann an der Unterbrechungsstelle eine derartige Kopplungseinheit eingesetzt werden.

Eine Signalverbindung gemäß Anspruch 10 ist kostengünstig. Aufgrund ihrer geringen Reichweite ist die Gefahr eines Übersprechens, d.h. einer irrtümlichen Übertragung an ein drittes Transportfahrzeug, gering.

Eine alternative kostengünstige Übertragungstechnik zwischen den mobilen Übertragungseinrichtungen ist diejenige nach Anspruch 11.

Durch mobile Übertragungseinrichtungen gemäß Anspruch 12 wird die Gefahr eines Übersprechens zusätzlich verringert. Werden besonders richtungssensitive mobile Übertragungseinrichtungen eingesetzt, kann die Aufzeichnungseinrichtung einen Zwischenspeicher umfassen, der dann zum Einsatz kommt, wenn aufgrund des Richtcharakters eine zeitweilige Störung der Übertragung vorliegt. Im Zwischenspeicher werden die während dieses Störungszeitraums von den Sensoren empfangenen Daten so lange vorgehalten, bis sie von den mobilen Übertragungseinrichtungen ohne Störung übertragen werden können.

Eine Codierung gemäß Anspruch 13 gewährleistet eine sichere Zuordnung des Transportfahrzeugs bzw. der Transporteinheit, zu empfangenen Zustandsparameter-Daten. Fehlerhafte Übermittlungen werden dadurch vermieden.

Dabei ist die Codierung gemäß Anspruch 14 kostengünstig, da sie sich z.B. mit Standard-Elektronikkomponenten realisieren läßt.

Alternativ oder zusätzlich ist eine Zuordnung des Transportfahrzeugs bzw. der Transporteinheit durch eine Identifikations-Kennung gemäß Anspruch 15 möglich. Eine derartige Identifikations-Kennung kann z. B. durch eine führende Bitsequenz realisiert werden, die vor den eigentlichen Zustandsparameter-Daten übertragen wird.

Die bidirektionale Kommunikation gemäß Anspruch 16 kann bei der Überwachung der Zustandsparameter-Daten derart eingesetzt werden, daß ausgehend von der Zentralstation anhand der dort eingehenden Zustandsparameter-Daten optimierte Transportparameter (z. B. Kühlleistung bei einem Kühltransport) festgelegt und an das Transportfahrzeug zur automatischen Einstellung übermittelt werden. Alternativ kann auch ein Alarmsignal bei Vorliegen entsprechender Daten an den Fahrzeugführer übertragen werden.

In eine Transporteinheit gemäß Anspruch 17 lassen sich auf einfache Weise der Sensor und die Aufzeichnungseinrichtung integrieren.

Ausführungsbeispiele der Erfindung werden nachfolgend anhand der Zeichnung näher erläutert; es zeigen:
- Figur 1: den schematischen Aufbau einer erfindungsgemäßen Dokumentationsvorrichtung;
- Figuren 2 und 3: alternative Ausführungsformen der Dokumentationsvorrichtung.

In der Zeichnung sind Komponenten verbindende Signalleitungen gestrichelt und drahtlose Signalwege durch geschwungene Pfeile dargestellt. Dabei ist die Anzahl paralleler geschwungener Pfeile ein Maß für die Signalstärke der drahtlosen Übertragung.

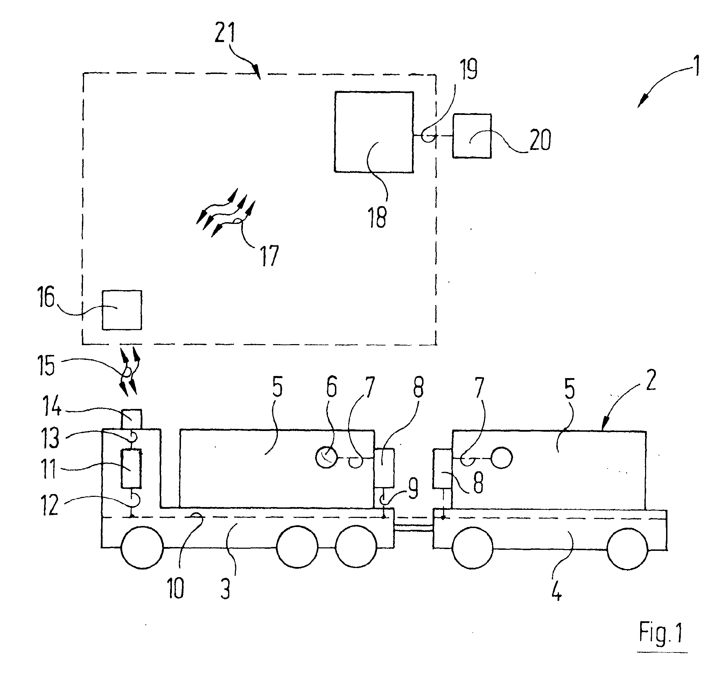

Die in Figur 1 insgesamt mit dem Bezugszeichen 1 versehene Dokumentationsvorrichtung dient zur Erfassung, Aufzeichnung und Übertragung des Ist-Zustands transportierter Waren. Letzterer wird anhand von Zustandsparametern charakterisiert, wie z. B. der Temperatur, dem Druck, dem Gewicht, der Luftfeuchtigkeit oder der chemischen Zusammensetzung der Waren.

Beim Transport sind die Waren in einem Lastzug 2 als Transportfahrzeug untergebracht. Dieser umfaßt einen Lastkraftwagen 3 mit Anhänger 4, die je mit einem Frachtcontainer 5 beladen sind. Da die Frachtcontainer 5 und die an ihnen angebrachten Komponenten gleich aufgebaut sind, genügt es in der weiteren Beschreibung, nur einen Frachtcontainer 5 zu beschreiben.

Innerhalb jedes Frachtcontainers 5 ist ein Sensor 6 angebracht, der den oder die jeweiligen Zustandsparameter der Waren und auch ggf. die Zustandsparameter des jeweiligen Frachtcontainers 5 erfaßt.

Je nach Zustandsparameter handelt es sich beim Sensor 6 z.B. um ein Thermometer, ein Barometer, eine Waage, ein Hygrometer oder einen chemischen Sensor. Als Waage kommen insbesondere Dehnungsmeßstreifen in Frage, die in einer von der Ware belasteten Fläche eines Warengestells (nicht dargestellt) im Frachtcontainer 5 oder des Frachtcontainers 5 selbst integriert sind.

Jeder Sensor 6 steht über eine Signalleitung 7 mit einer Aufzeichnungseinrichtung 8 in Signalverbindung. Die Aufzeichnungseinrichtung 8 ist an einer Außenwand des Frachtcontainers 5 angebracht. Die Signalleitung 7 ist ein Kabel, das durch eine entsprechende Öffnung in einer Wand des Frachtcontainers 5 geführt ist.

Die Aufzeichnungseinrichtung 8 steht über ein Verbindungskabel 9 mit einem elektrischen Versorgungskabel 10 des Lastzugs 2 in Signalverbindung. Das elektrische Versorgungskabel 10 ist z. B. ein Stromversorgungskabel für die Schlußlichter des Anhängers 4.

Die Aufzeichnungseinrichtung 8 dient zur Zwischenspeicherung der über die Signalleitung 7 empfangenen Daten. Diese Zwischenspeicherung kann entweder digital, z. B. in einem Speicherchip, oder analog, z. B. auf einem Magnetband, erfolgen.

Im Führerhaus des Lastkraftwagens 3 ist eine Zentraleinheit 11 vorgesehen. Die Signalverbindung zwischen den Aufzeichnungseinrichtungen 8 und der Zentraleinheit 11 über die Verbindungskabel 9 sowie das elektrische Versorgungskabel 10 wird durch ein weiteres Verbindungskabel 12 komplettiert, das das Versorgungskabel 10 mit der Zentraleinheit 11 verbindet. In dieser werden die in den Aufzeichnungseinrichtungen 8 der Frachtcontainer 5 zwischengespeicherten Zustandsparameter-Daten gesammelt und stehen dem Fahrer über eine nicht dargestellte Anzeigeeinrichtung der Zentraleinheit 11 zur visuellen Überwachung des Zustands der von ihm tranportierten Waren zur Verfügung.

Die Zentraleinheit 11 steht über eine Signalleitung 13 mit einer mobilen Übertragungseinrichtung 14 in Signalverbindung. Mittels einer Antenne steht die mobile Übertragungseinrichtung 14 über einen drahtlosen Signalweg 15 mit einer Relaisstation 16 in Signalverbindung. Diese Signalverbindung wird über ein kommerzielles Telefonnetz hergestellt, d. h. die mobile Übertragungseinrichtung 14 hat die Funktion eines drahtlosen Modems.

Die Relaisstation 16 steht in bekannter Weise über einen drahtlosen Signalweg 17 mit einer zentralen Übertragungsstation 18 in Verbindung. Diese ist über eine Signalleitung 19 mit einer Zentralstation 20 verbunden, die sich in der Zentrale des den Lastzug 2 zum Transport einsetzenden Unternehmens befindet und der zentralen Dokumentation und Überwachung der aufgezeichneten Zustandsparameter-Daten dient. Statt der galvanischen Signalleitung 19 kann selbstverständlich auch ein drahtloser Signalweg eingesetzt werden, in dem bei Bedarf eine weitere Relaisstation liegen kann.

Eine Ausführungsform eines drahtlosen Modems für die Übertragungseinrichtung 14 ist ein Handy.

Die Übertragungsstationen 16 und 18 bilden zusammen eine stationäre Übertragungseinrichtung 21.

Die Funktion der Dokumentationsvorrichtung 1 ist folgende:

Mittels der Sensoren 6 werden die Zustandsparameter-Daten der Waren in den Frachtcontainern 5 erfaßt und in den Aufzeichnungseinrichtungen 8 zwischengespeichert. In regelmäßigen Zeitabständen erfolgt eine Übertragung der Zustandsparameter-Daten von den Aufzeichnungseinrichtungen 8 der Frachtcontainer 5 an die Zentraleinheit 11. Diese Signalübertragung erfolgt durch Umwandeln der Zustandsparameter-Daten in ein Modulationssignal und Aufmodulieren des Modulationssignals auf das Versorgungskabel 10, z.B. durch Pulsmodulation. Die Zentraleinheit 11 verfügt über ein entsprechendes Filter zur Abtrennung des Modulationssignals von den sonstigen elektrischen Signalen, die über das Versorgungskabel 10 laufen. Aus dem Modulationssignal jedes Aufzeichnungsgeräts 8 kann die Zentraleinheit 11 den zugehörigen Frachtcontainer 5 identifizieren.

Zusätzlich zu den regelmäßigen Übertragungen kann eine Übertragung der Zustandsparameter-Daten dann erfolgen, wenn diese außerhalb vorgegebener Toleranzwerte liegen. Im Falle eines Kühltransports kann z.B. in das Aufzeichnungsgerät 8 eine maximal zulässige Temperatur eingespeichert werden, oberhalb derer automatisch ein Alarmsignal und der aktuelle Wert der Zustandsparameter-Daten von der entsprechenden Aufzeichnungseinrichtung 8 an die Zentraleinheit 11 übermittelt wird.

Der Fahrer ist über die Zentraleinheit 11 über den aktuellen Zustand der von ihm transportierten Waren informiert und kann ggf. eingreifen, wenn dies die aktuellen Zustandsparameter-Daten erfordern.

In regelmäßigen Zeitabständen werden die Zustandsparameter-Daten von der Zentraleinheit 11 über die mobile Übertragungseinrichtung 14 und die Übertragungsstationen 16, 18 an die Zentralstation 20 übermittelt. Dabei können die übermittelten Daten entweder Rohdaten, d. h. nicht weiter verarbeitete Sensordaten, sein oder von den Aufzeichnungseinrichtungen 8 bzw. der Zentraleinheit 11 in ein kompakt zu übertragendes Datenformat gebracht werden.

In der Zentralstation 20 werden die ankommenden Zustandsparameter-Daten dem jeweiligen Lastzug 2 zugeordnet.

Die Übertragung zwischen der mobilen Übertragungseinrichtung 14 und der stationären Übertragungseinrichtung 21 erfolgt mittels einer Datensequenz mit führender Senderkennung, so daß eine Zuordnung der übermittelten Zustandsparameter-Daten zum jeweiligen Frachtcontainer 5 möglich ist.

In der Zentralstation 20 erfolgt somit eine lückenlose Überwachung des Warenzustands aller zur Dokumentationsvorrichtung 1 gehörender Lastzüge 2. Die aufgezeichneten Zustandsparameter-Daten können dann beispielsweise zum Nachweis des vorschriftsmäßigen Transports ausgedruckt bzw. in sonstiger Weise ausgelesen werden und dem Lieferschein der Waren beigefügt werden.

Zusätzlich ist durch eine Überwachung der ankommenden Daten in der Zentralstation 20 die Möglichkeit gegeben, Maßnahmen zu ergreifen, wenn die Zustandsparameter-Daten vorgegebene Toleranzwerte verlassen. Hierzu können von der Zentralstation 20 über die Übertragungseinrichtung 21 entsprechende Steuerdaten oder Alarmsignale an die mobile Übertragungseinrichtung 14 übermittelt werden. Der drahtlose Signalweg 15 ist dazu zur bidirektionalen Kommunikation ausgelegt.

Die so empfangenen Steuerdaten können über die Zentraleinheit 11 dazu eingesetzt werden, Konfigurationen der Frachtcontainer 5, z. B. bei einem Kühlcontainer die Einstellung der Kühlleistung, automatisch zu ändern. Alternativ bzw. zusätzlich können die Alarmsignale ein Eingreifen des Fahrers zum Einleiten von Gegenmaßnahmen auslösen.

Die in Figur 1 beschriebenen Signalleitungen 7, 9, 10, 12, 13, 19 können auch kapazitive oder induktive Kopplungseinheiten aufweisen, falls dies konstruktiv erforderlich ist.

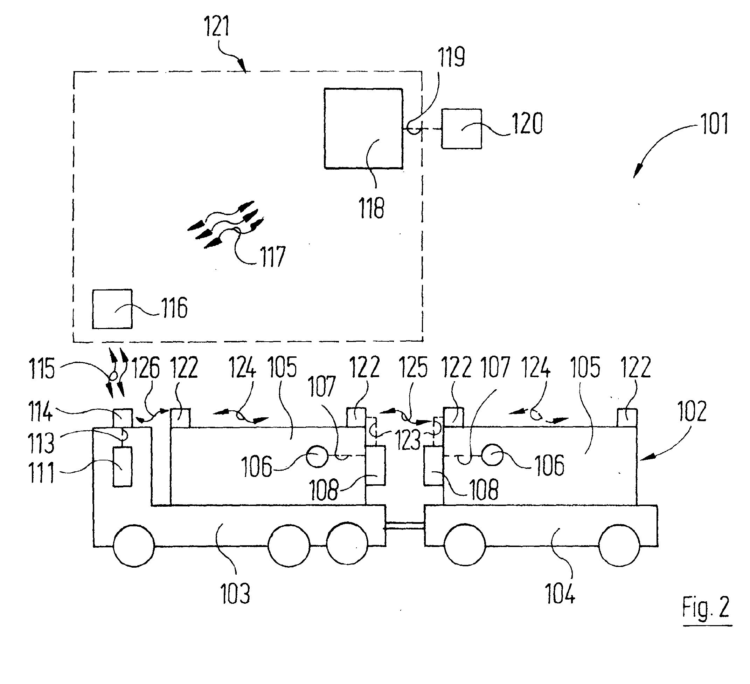

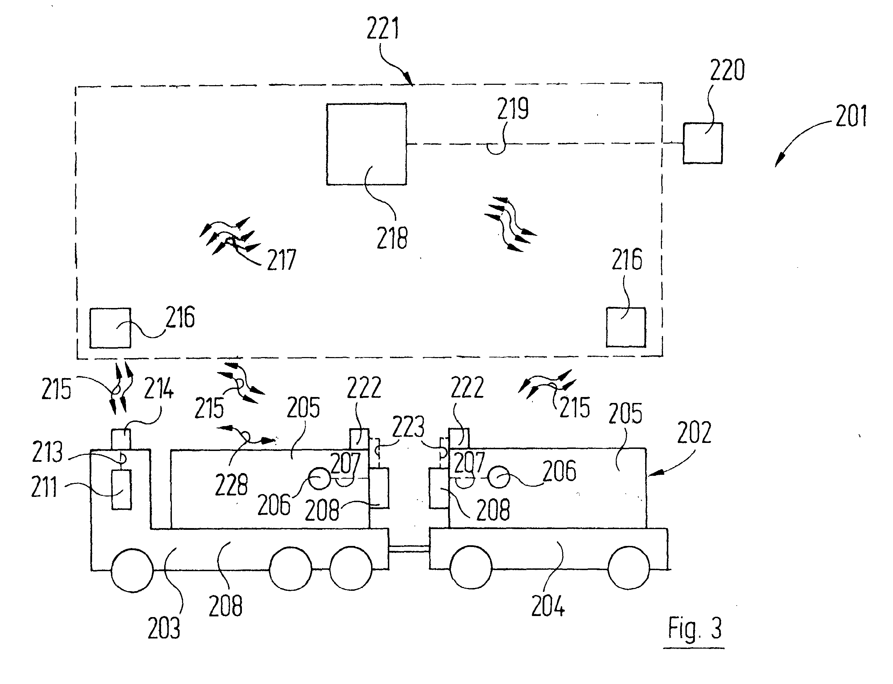

Alternative Ausführungsformen der Dokumentationsvorrichtung sind in den Figuren 2 und 3 dargestellt. Komponenten, die denjenigen entsprechen, die im Zusammenhang mit Figur 1 beschrieben wurden, tragen dabei jeweils um 100 erhöhte Bezugszeichen und werden nicht nochmals im einzelnen beschrieben.

Bei der in Figur 2 dargestellten Dokumentationsvorrichtung 101 stehen die Aufzeichnungseinrichtungen 108 mit der Zentraleinheit 111 bzw. der mobilen Übertragungseinrichtung 114 nicht über Kabel sondern drahtlos in Verbindung. Hierzu dienen dezentrale mobile Übertragungsseinrichtungen 122, von denen eine am vorderen und eine am hinteren Ende der Frachtcontainer 105 angebracht ist. Eine der beiden dezentralen mobilen Übertragungseinrichtungen 122 steht über eine Signalleitung 123 mit der Aufzeichnungseinrichtung 108 des entsprechenden Frachtcontainers 105 in Signalverbindung. Die dezentralen mobilen Übertragungseinrichtungen 122 der Frachtcontainer 105 stehen untereinander über einen Infrarot-Signalweg 124 drahtlos in Signalverbindung. Zusätzlich steht die in Fahrtrichtung vordere dezentrale mobile Übertragungseinrichtung 122 des Frachtcontainers 105 auf dem Anhänger 104 mit der hinteren dezentralen mobilen Übertragungseinrichtung 122 des Frachtcontainers 105 auf dem Lastkraftwagen 103 drahtlos über einen Infrarot-Signalweg 125 in Signalverbindung. Die in Fahrtrichtung vordere dezentrale mobile Übertragungseinrichtung 122 steht über einen Infrarot-Signalweg 126 mit der mobilen Übertragungseinrichtung 114 in Signalverbindung.

Die dezentralen mobilen Übertragungseinrichtungen 122 senden und empfangen über die Signalwege 124 gerichtete Signale. Dabei senden die dezentralen mobilen Übertragungseinrichtungen 122 mit einem Sendekegel mit geringem Öffnungswinkel und weisen gleichzeitig eine kegelförmige Empfangscharakterisik mit geringem Öffnungswinkel auf. Der Öffnungswinkel ist dabei so bemessen, daß die Signalwege bei einer normalen Kurvenfahrt des Lastzugs 102 nicht unterbrochen werden. Die Sendeleistung der mobilen Übertragungseinrichtungen 122 ist derart gering, daß ein maximaler Übertragungsweg mit der Länge eines Frachtcontainers 105 nicht überschritten werden kann.

Die Datenübertragung bei der Dokumentationsvorrichtung 101 funktioniert folgendermaßen:

Die wie beim Ausführungsbeispiel nach Figur 1 aufgezeichneten Zustandsparameter-Daten werden über die Signalleitungen 123 an die den Aufzeichnungseinrichtungen 108 zugeordneten dezentralen mobilen Übertragungseinrichtungen 122 übermittelt. Über die Infrarotsignalwege 124, 125 erfolgt eine Übermittlung der Zustandsparameter-Daten aller Aufzeichnungseinrichtungen 108 über eine Kette von dezentralen mobilen Übertragungseinrichtungen 122 der Frachtcontainer 105 an die zentrale mobile Übertragungseinrichtung 114 des Lastkraftwagens 103. Diese übermittelt die Zustandsparameter-Daten einerseits über die Signalleitung 113 an die mobile Zentraleinheit 111 und andererseits, wie im Zusammenhang mit Figur 1 beschrieben, über den Signalweg 115 an die stationäre Übertragungseinrichtung 121.

Die Richtcharakteristik sowie die Begrenzung der Übertragungsleistung der dezentralen mobilen Übertragungseinrichtung 122 verhindern, daß eine unerwünschte Übertragung von Zustandsparameter-Daten an mobile Übertragungseinrichtungen eines anderen Lastzugs stattfindet. Wird, z. B. bei extremer Kurvenfahrt, der Infrarotsignalweg 125 unterbrochen, sorgt die Zwischenspeicherung der Zustandsparameter-Daten in den Aufzeichnungseinrichtungen 108 dafür, daß keine Zustandsparameter-Daten verloren gehen. Eine unterbrochene Datenübertragung wird dann ggf. wiederholt.

Eine weitere alternative Möglichkeit der Datenübertragung weist die in Figur 3 dargestellte Dokumentationsvorrichtung 201 auf. Dort ist jeder Aufzeichnungseinrichtung 208 eine mobile Übertragungseinrichtung 222 zugeordnet, die mit ihr über eine Signalleitung 223 in Signalverbindung steht. Die mobilen Übertragungseinrichtungen 222 stehen über Funkwege 215 direkt mit der stationären Übertragungseinrichtung 221 in Verbindung. Dabei wird an diejenige dezentrale Relaisstation 216 übertragen, die zur entsprechenden mobilen Übertragungseinrichtung 222 die beste Übertragungsmöglichkeit bietet. Die Relaisstationen 216 stehen mit der zentralen Übertragungsstation 218, analog wie im Zusammenhang mit Figur 1 beschrieben, in Verbindung.

Die Übermittlung der Zustandsparameter-Daten mit der Dokumentationsvorrichtung 201 funktioniert folgendermaßen:

Die wie im Zusammenhang mit Figur 1 beschrieben erfaßte und aufgezeichneten Zustandsparameter-Daten werden über die Signalleitungen 223 an die mobilen Übertragungseinrichtungen 222 jedes Frachtcontainer 205 übermittelt. Diese wählen die für die Datenübertragung am besten geeignete Relaisstationen 216 individuell aus. Anschließend erfolgt die Datenübertragung über Signalwege 215 analog wie im Zusammenhang mit Figur 1 beschrieben. Alternativ oder zusätzlich erfolgt ebenfalls über einen Signalweg 215 eine Übertragung von ggf. zusammengefaßten Zustandsparameter-Daten über die zentrale mobile Übertragungsstation 214 an die nächste Relaisstation 216.

Zusätzlich stehen die mobilen Übertragungseinrichtungen 222 über eine zentrale mobile Übertragungseinrichtung 214 mit der Zentraleinheit 211 über einen drahtlosen Signalweg 228 geringer Leistung in Verbindung, um dem Fahrer des Lastkraftwagens 203 zusätzlich eine Überwachung der Zustandsparameter-Daten zu ermöglichen.

Die drahtlose Übertragung zwischen den mobilen Übertragungseinrichtungen 114 und 122 des Ausführungsbeispiels von Fig. 2 ist nicht auf Infrarotwellen beschränkt. Alternativ können auch andere Übertragungstechniken, z.B. mittels Ultraschall, eingesetzt sein. Statt zweier mobiler Übertragungseinrichtungen 122 pro Frachtcontainer 105 kann auch nur eine z.B. mittig auf dem Frachtcontainer 105 angeordnete mobile Übertragungseinrichtung vorgesehen sein.

In Figur 3 ist beispielhaft dargestellt, daß zur Übertragung der Zustandsparameter-Daten eines Transportfahrzeugs 202 voneinander verschiedene Relaisstationen 216 zuständig sein können, die jeweils mit einer mobilen Übertragungseinrichtung 222 des Transportfahrzeugs 202 kommunizieren. Dies kann z.B. bei sehr langen Transportfahrzeugen, z.B. Güterzügen, der Fall sein.

## Patentansprüche

1. Dokumentationsvorrichtung mit mindestens einem Sensor
zur Aufnahme von Zustandsparameter-Daten eines Transportfahrzeugs und/oder von darin transportierten Waren; mit mindestens einer Aufzeichnungseinrichtung, die an dem Transportfahrzeug oder den Waren angebracht ist und die mit dem Sensor zur Aufzeichnung der Zustandsparameter-Daten in Signalverbindung steht; und mit einer stationären Zentralstation für die zentrale Dokumentation der aufgezeichneten Zustandsparameter-Daten
**dadurch gekennzeichnet, daß**
die Aufzeichnungseinrichtung (8, 108, 208) mit mindestens einer mobilen Übertragungseinrichtung (14; 114, 122; 214, 222), die mit dem Transportfahrzeug (2; 102; 202) mitgeführt ist, in Signalverbindung steht, die so ausgeführt ist, daß sie mit einer stationären Übertragungseinrichtung (21; 121; 221) zur Übertragung der Zustandsparameter-Daten an die Zentralstation (20; 120; 220) drahtlos kommuniziert.

2. Dokumentationsvorrichtung nach Anspruch 1, dadurch
gekennzeichnet, daß die stationäre Übertragungseinrichtung (21; 121; 221) eine Mehrzahl von dezentralen Relaisstationen (16; 116; 216) umfaßt.

3. Dokumentationsvorrichtung nach Anspruch 2, dadurch
gekennzeichnet, daß die mobile Übertragungseinrichtung (14; 114, 122; 214, 222) mit der stationären Übertragungseinrichtung (21, 121, 221) über ein Mobilfunknetz kommuniziert.

4. Dokumentationsvorrichtung nach einem der vorhergehenden
Ansprüche, **dadurch gekennzeichnet, daß** das Transportfahrzeug (2; 102; 202) mehrere Transporteinheiten (5; 105; 205) umfaßt, die je mindestens einen Sensor (6; 106; 206) und eine Aufzeichnungseinrichtung (8; 108; 108), die mit der mobilen Übertragungseinrichtung (14; 114, 122; 214, 222) in Signalverbindung steht, aufweisen.

5. Dokumentationsvorrichtung nach Anspruch 4, dadurch
gekennzeichnet, daß an jeder Transporteinheit (105; 205) eine mobile drahtlos arbeitende Übertragungseinrichtung (122; 214) angebracht ist.

6. Dokumentationsvorrichtung nach Anspruch 5, dadurch
gekennzeichnet, daß die mobilen Übertragungseinrichtungen (122) der Transporteinheiten (105) so ausgeführt sind, daß sie miteinander in Signalverbindung stehen.

7. Dokumentationsvorrichtung nach einem der Ansprüche 4
bis 6, **dadurch gekennzeichnet, daß** die Aufzeichnungseinrichtungen (8; 108; 208) der Transporteinheiten (5; 105; 205) mit einer zentralen mobilen Übertragungseinrichtung (14; 114; 214) in Signalverbindung stehen.

8. Dokumentationsvorrichtung nach Anspruch 7, dadurch
gekennzeichnet, daß die Aufzeichnungseinrichtung (8) mit der zentralen mobilen Übertragungseinrichtung (14) über ein Kabel (10) in Signalverbindung steht.

9. Dokumentationsvorrichtung nach Anspruch 8, dadurch
gekennzeichnet, daß im Signalweg zwischen der Aufzeichnungseinrichtung (8) und der zentralen mobilen Übertragungseinrichtung (14) eine kapazitive oder induktive Kopplungseinheit vorgesehen ist.

10. Dokumentationsvorrichtung nach Anspruch 7, dadurch
gekennzeichnet, daß die Signalverbindung zwischen den mobilen Übertragungseinrichtungen (114, 122; 214, 222) über einen Infrarot-Signalweg (124, 125, 126; 228) erfolgt.

11. Dokumentationsvorrichtung nach Anspruch 7, dadurch
gekennzeichnet, daß die Signalverbindung zwischen den mobilen Übertragungseinrichtungen (114, 122; 214, 222) über einen Ultraschall-Signalweg (124, 125, 126; 228) erfolgt.

12. Dokumentationsvorrichtung nach Anspruch 10 oder 11,
**dadurch gekennzeichnet, daß** die mobilen Übertragungseinrichtungen (114, 122; 214, 222) eine gerichtete Sende- und/oder Empfangscharakteristik aufweisen.

13. Dokumentationsvorrichtung nach einem der vorhergehenden
Ansprüche, **dadurch gekennzeichnet, daß** die übertragenen Zustandsparameter-Daten derart codiert sind, daß in der Zentralstation (20; 120; 220) eine Zuordnung der Zustandsparameter-Daten zum individuellen Transportfahrzeug (2; 102; 202) und ggf. zur individuellen Transporteinheit (5; 105; 205) möglich ist.

14. Dokumentationsvorrichtung nach Anspruch 13, **gekennzeichnet durch** eine Einrichtung zur Modulations-Codierung der Zustandsparameter-Daten.

15. Dokumentationsvorrichtung nach Anspruch 13 oder 14,
**gekennzeichnet durch** eine Einrichtung zur Erzeugung einer Identifikations-Kennung der Aufzeichnungseinrichtung (8; 108; 208) und/oder der mobilen Übertragungseinrichtung (14; 122, 114; 214, 220) der Zustandsparameter-Daten.

16. Dokumentationsvorrichtung nach einem der vorhergehenden
Ansprüche, **dadurch gekennzeichnet, daß** die drahtlose Kommunikation als bidirektionale Kommunikation ausgelegt ist.

17. Dokumentationsvorrichtung nach einem der vorhergehenden
Ansprüche, **dadurch gekennzeichnet, daß** die Transporteinheit einen Frachtcontainer (5; 105; 205) umfaßt.
